# EUROPÄISCHE PATENTSCHRIFT

(11) **EP 2 826 579 B1**
(45) Veröffentlichungstag und Bekanntmachung des Hinweises auf die Patenterteilung: **12.04.2017**
(21) Anmeldenummer: 14175811.0
(22) Anmeldetag: 04.07.2014
(51) Int. Cl.: B23B 31/00, B23B 31/107, B23B 51/04, B27B 5/30

(54) **Aufnahme für eine Lochsäge und Werkzeuganordnung**
Holding fixture for a hole saw and tool assembly
Réceptacle de scie cloche et assemblage d'outil

(30) Priorität: 19.07.2013 DE 202013006690 U
(43) Veröffentlichungstag der Anmeldung: 21.01.2015
(73) Patentinhaber: EasyWork UG (haftungsbeschränkt), 74374 Zaberfeld (DE)
(72) Erfinder: Schmitt, Gerold, 74374 Zaberfeld (DE)
(74) Vertreter: Patentanwälte Ruff, Wilhelm, Beier, Dauster & Partner mbB

(56) Entgegenhaltungen:
- DE-A1- 19 749 835
- FR-A6- 2 049 352
- US-A- 5 000 631
- US-A- 5 447 397
- US-A1- 2002 028 117
- US-A1- 2004 154 838
- US-A1- 2004 161 313

## Beschreibung

Die Erfindung betrifft eine Aufnahme zur Kopplung einer Lochsäge mit einem maschinellen Antrieb gemäß dem Oberbegriff des Anspruchs 1, und eine Werkzeuganordnung zur Verwendung mit einem maschinellen Antrieb umfassend eine Lochsäge und eine Aufnahme. Eine solche Aufnahme und eine solche Werkzeuganordnung sind aus der US 2002/0028117 A1 bekannt.

Als Lochsäge wird im Zusammenhang mit der Anmeldung ein (kreis-) zylindrisches Schneidwerkzeug bezeichnet, welches an einer Stirnseite, im Folgenden als Schneidseite bezeichnet, Schneidzähne aufweist. Eine Lochsäge wird üblicherweise mit einer Bohrmaschine, insbesondere einer Handbohrmaschine, oder einer anderen Maschine, durch welche die Lochsäge um ihre Achse rotierend antreibbar ist, verwendet. Eine Vorrichtung zur Kopplung der Lochsäge mit dem maschinellen Antrieb wird im Zusammenhang mit der Anmeldung als Aufnahme bezeichnet.

Die Aufnahme weist üblicherweise einen Aufnahmeschaft, welcher in einem Bohrfutter oder dergleichen aufnehmbar ist, sowie Kopplungsmittel zur Kopplung mit der Lochsäge auf.

Für andere Werkzeuge, beispielsweise für Kernbohrer, sind Schnellwechselanschlüsse beispielsweise aus DE 197 49 835 A1, US 2004/0154838 A1 oder US 5,000,631 bekannt, wobei eine Aufnahme und ein Aufnahmeschaft eine Kerbverzahnung für eine Drehmomentenübertragung aufweisen.

Aus FR 2 049 352 ist eine Aufnahme für einen Fräskopf mit zwei konischen Kontaktflächen und einem dazwischenliegenden geradzylindrischen Abschnitt bekannt, wobei Rastelemente für eine Kopplung in dem geradzylindrischen Abschnitt vorgesehen sind.

Aus der US 2002/0028117 A1 ist eine Aufnahme zur Kopplung einer Lochsäge mit einem maschinellen Antrieb bekannt, wobei an der Lochsäge ein Anschlussstutzen mit einer Sechseckform angebracht ist, welcher in eine Ausnehmung mit Sechseckform an einem Aufnahmeschaft einführbar ist.

Für eine Kopplung der Lochsäge mit der Aufnahme ist es bekannt, an der Aufnahme ein Außengewinde vorzusehen, auf welches eine Lochsäge mit einem Innengewinde aufgeschraubt wird. Für eine notwendige Übertragung eines erforderlichen Drehmoments ist es dabei bekannt, Anlageflächen an den Gewindeenden vorzusehen. Alternativ ist es bekannt, an der Aufnahme Mitnehmerstifte vorzusehen, die in komplementäre Mitnahmebohrungen an der Lochsäge eingerastet werden. Bei derartigen Aufnahmen mit Mitnehmerstiften ist es notwendig, die Lochsäge nach einem Aufschrauben auf die Aufnahme wieder soweit zurückzudrehen bis die Mitnehmerstifte einrasten können. Dadurch kann zwischen der Lochsäge und der Aufnahme ein Spiel entstehen. Dieses Spiel verursacht ungünstige Schnitteigenschaften. Die Bohrlochqualität ist daher oft nur gering. Durch entstehende Vibrationen verringert sich zudem die Standzeit der Lochsägen. Weiter erhöht sich die Belastung des Anwenders bei einem handgeführten maschinellen Antrieb und/oder ein Verschleiß an dem maschinellen Antrieb.

Alternativ ist es bekannt, die Lochsäge mittels Klemmschrauben an einem Schaft der Aufnahme zu sichern. Ein Wechsel der Lochsäge an der Aufnahme, beispielsweise aufgrund von Verschleiß und/oder zur Verwendung einer Lochsäge mit einem abweichenden Sägendurchmesser, erfolgt durch Auf- und Abschrauben und ggf. Entriegeln der Mitnehmerstifte.

Es ist eine Aufgabe der Erfindung, eine Aufnahme zur Kopplung einer Lochsäge mit einem maschinellen Antrieb und eine Werkzeuganordnung zur Verwendung mit einem maschinellen Antrieb umfassend eine Lochsäge und eine Aufnahme zu schaffen, welche eine spielfreie Kopplung ermöglichen.

Diese Aufgabe wird durch die Gegenstände mit den Merkmalen der Ansprüche 1 und 6 gelöst. Weitere Vorteile der Erfindung ergeben sich aus den Unteransprüchen.

Gemäß einem ersten Aspekt wird eine Aufnahme zur Verwendung einer Lochsäge an einem maschinellen Antrieb geschaffen, umfassend einen Aufnahmeschaft zur Verbindung mit dem maschinellen Antrieb und einen werkzeuglos mit dem Aufnahmeschaft verbindbaren, der Lochsäge ortsfest zugeordneten Anschlussstutzen, wobei der Aufnahmeschaft eine der Lochsäge zugewandte Stirnfläche aufweist, wobei der Aufnahmeschaft mindestens einen, von der Stirnfläche abragenden Mitnehmerstift aufweist, und wobei der Anschlussstutzen und der Aufnahmeschaft zueinander komplementäre konische Kontaktflächen aufweisen. Durch die konischen Kontaktflächen wird ein Rundlauf und ein geringes Spiel zwischen Aufnahmeschaft und Anschlussstutzen erreicht.

Gemäß einem zweiten Aspekt wird eine Werkzeuganordnung zur Verwendung mit einem maschinellen Antrieb geschaffen, umfassend eine Lochsäge mit einem Schneidzähne aufweisenden Schneidende und einem gegenüberliegenden Kopplungsende und eine Aufnahme mit einem Aufnahmeschaft zur Verbindung mit dem maschinellen Antrieb und mit einem werkzeuglos mit dem Aufnahmeschaft verbindbaren, der Lochsäge ortsfest zugeordneten Anschlussstutzen. Der Anschlussstutzen ragt dabei vorzugsweise von dem Kopplungsende in Richtung weg von dem Schneidende ab.

Der Aufnahmeschaft weist eine an den maschinellen Antrieb, insbesondere eine Antriebsmaschine, angepasste Geometrie auf. In vorteilhaften einfachen Gestaltungen weist der Aufnahmeschaft ein zylinderstiftförmiges Ende mit einem kreisförmigen Querschnitt auf. In anderen Ausgestaltungen ist ein zylinderstiftförmiges Ende mit einem polygonförmigen Querschnitt, insbesondere mit drei jeweils um 120°versetzten Seitenflächen vorgesehen. Ein derartiger Aufnahmeschaft ist durch ein herkömmliches Bohrfutter klemmend und/oder in Maschinen mittels Spannzangen aufnehmbar. Der Aufnahmeschaft und der Anschlussstutzen sind derart gestaltet, dass eine werkzeuglose Kopplung möglich ist. Lochsägen mit unterschiedlichen Sägedurchmessern, unterschiedlicher Schneidgeometrie und/oder unterschiedlichen Materialien, welchen jeweils ein Anschlussstutzen zugeordnet ist, können somit schnell und ohne Werkzeuge gewechselt werden.

Hierfür ist den einzelnen Lochsägen jeweils ein Anschlussstutzen ortsfest zugeordnet. Als ortsfeste Zuordnung im Sinne der Anmeldung werden dabei sowohl eine einteilige Gestaltung als auch eine spielfreie und entweder lösbare oder dauerhafte, nicht zerstörungsfrei lösbare Verbindung bezeichnet. Neue Lochsägen sind dabei mit einem entsprechenden Anschlussstutzen gestaltbar. Bereits auf dem Markt befindliche Lochsägen können durch einen Anschlussstutzen zur Verwendung mit dem Aufnahmeschaft entsprechend nachgerüstet werden.

In einer Ausgestaltung weist der Anschlussstutzen eine Ausnehmung auf, in welche der Aufnahmeschaft einführbar ist. In vorteilhaften Ausgestaltungen ist für eine geeignete Dimensionierung der Bauteile vorgesehen, dass der Aufnahmeschaft eine Ausnehmung aufweist, in welche der Anschlussstutzen einführbar ist. Zur Bildung der Kontaktflächen ist der Anschlussstutzen dabei erfindungsgemäß zumindest abschnittsweise als Konus gestaltet und in einen entsprechenden Gegenkonus einführbar.

Erfindungsgemäß sind der Anschlussstutzen und der Aufnahmeschaft als Teile einer Steckkupplung ausgebildet. Eine Steckkupplung erlaubt ein besonders einfache Koppeln und Entkoppeln des Anschlussstutzens mit dem Aufnahmeschaft.

Für eine Sicherung sind in einer Ausgestaltung zusätzliche Arretiermittel vorgesehen. Erfindungsgemäß weist die Steckkupplung für eine Arretierung eine zwischen einer Verriegelungsstellung und einer Freigabestellung verdreh- und/oder verschiebbare Sicherungshülse und ein Rastelement auf, wobei das Rastelement in der Verriegelungsstellung in eine Rastnut an dem Anschlussstutzen und/oder dem Aufnahmeschaft eingreift. Das Rastelement bewirkt so eine axiale Kopplung des Anschlussstutzens mit dem Aufnahmeschaft. Die Sicherungshülse kann zum Koppeln oder Entkoppeln axial verschoben oder verdreht werden. Für eine Fixierung der Sicherungshülse in der Verriegelungsstellung ist in einer Ausgestaltung eine vorgespannte Feder vorgesehen. In einer Ausgestaltung ist das Rastelement in Axialrichtung ortsfest an dem Aufnahmeschaft angeordnet und mittels der Sicherungshülse in eine Rastnut an dem Anschlussstutzen zwingbar. Das Rastelement ist in vorteilhaften Ausgestaltungen als Rastkugel gestaltet.

Anschließend an die konischen Kontaktflächen weisen der Aufnahmeschaft und der Anschlussstutzen erfindungsgemäß komplementäre geradzylindrische Abschnitte auf, wobei die Rastnut an dem geradzylindrischen Abschnitt des Anschlussstutzens vorgesehen ist. Dadurch ist es möglich, einen weiten Steigungswinkel für die Kontaktflächen zu wählen, wobei gleichzeitig eine zu extreme Verjüngung des Anschlussstutzens, insbesondere im Bereich der Rastnut vermieden wird.

Erfindungsgemäß sind die konische Kontaktflächen zwischen der Lochsäge zugewandten Enden des Anschlussstutzens und des Aufnahmeschafts und den geradzylindrischen Abschnitten angeordnet. Dadurch wird eine spielfreie Lagerung im Kraftangriffsbereich der Lochsäge gewährleistet.

In vorteilhaften Ausgestaltungen weist der Anschlussstutzen ein Außengewinde zur Verbindung mit einem Innengewinde an einem Kopplungsende der Lochsäge auf. Der Anschlussstutzen ist somit mit herkömmlichen Lochsägen, welche ein entsprechendes Innengewinde an ihrem Kopplungsende aufweisen, verbindbar. Eine Schraubverbindung erfolgt vorzugsweise mit einem hohen Anzugsdrehmoment, sodass eine spielfreie Verbindung gewährleistet ist.

Weiter ist vorzugsweise vorgesehen, dass der Aufnahmeschaft eine Ausnehmung für einen Zentrierbohrer und der Anschlussstutzen eine Zentrumsbohrung zur Durchführung eines in der Ausnehmung eingesetzten Zentrierbohrers aufweist. Der Zentrierbohrer ist vorzugsweise in der Ausnehmung auf herkömmliche Weise klemmend befestigbar.

Insbesondere ist in einer Ausgestaltung vorgesehen, dass der Aufnahmeschaft zwei von der Stirnfläche abragende Mitnehmerstifte aufweist.

Weitere Vorteile der Erfindung ergeben sich aus den Unteransprüchen und aus der nachfolgenden Beschreibung eines Ausführungsbeispiels der Erfindung, das in den Zeichnungen schematisch dargestellt ist. Für gleiche oder ähnliche Bauteile werden in den Zeichnungen einheitliche Bezugszeichen verwendet.

In den Zeichnungen zeigen:
- Fig. 1:: eine erste Schnittansicht einer Werkzeuganordnung zur Verwendung mit einem maschinellen Antrieb umfassend eine Lochsäge und eine Aufnahme und
- Fig. 2:: eine zweite Schnittansicht der Werkzeuganordnung gemäß Fig. 1 mit Schnittebene I-I gemäß Fig. 1.

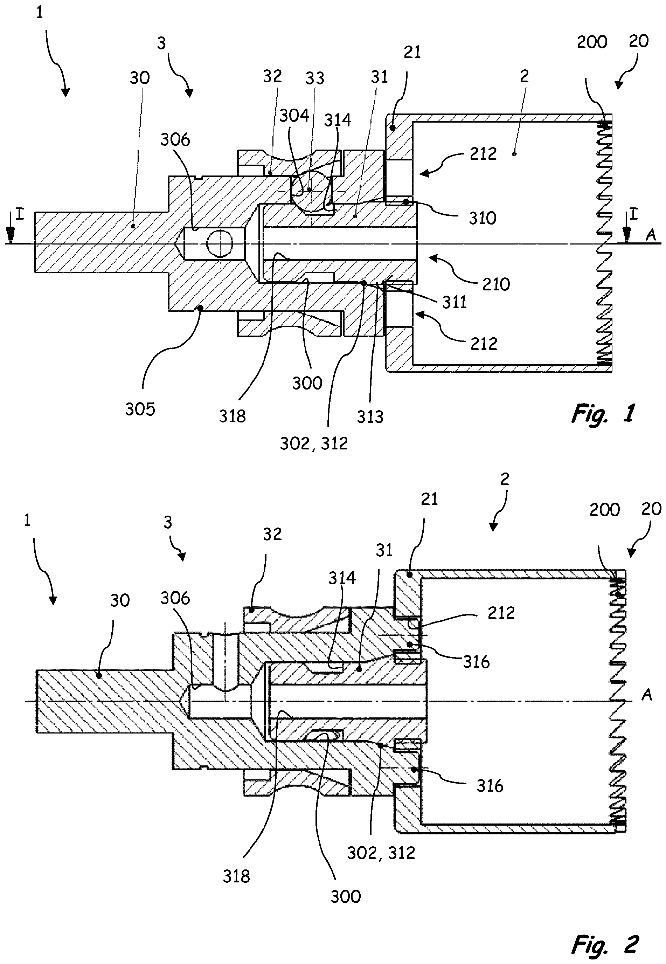

Die Figuren 1 und 2 zeigen eine Werkzeuganordnung 1 zur Verwendung mit einem nicht dargestellten maschinellen Antrieb in zwei Schnittansichten, wobei die Schnittebene I-I der Schnittansicht gemäß Fig. 2 zu der Schnittebene der Schnittansicht gemäß Fig. 1 um 90° versetzt ist.

Die Werkzeuganordnung 1 umfasst eine Lochsäge 2 und eine Aufnahme 3. Mittels des (nicht dargestellten) maschinellen Antriebs ist die Werkzeuganordnung 1 um eine Drehachse A rotierend antreibbar.

Die Lochsäge 2 ist hohlzylinderförmig mit einem Schneidzähne 200 aufweisenden Schneidende 20 und einem gegenüberliegenden Kopplungsende 21. Das Kopplungsende 21 der dargestellten Lochsäge 2 weist eine Bodenfläche oder Grundfläche auf. An der Grundfläche sind ein konzentrisch zu der Drehachse A angeordnetes Innengewinde 210 sowie mehrere Mitnahmebohrungen 212 vorgesehen. Derartige Mitnahmebohrungen 212 sind üblicherweise bei Lochsägen 2 ab einem Durchmesser von ca. 32 mm vorgesehen.

Die Aufnahme 3 umfasst einen Aufnahmeschaft 30 und einen Anschlussstutzen 31.

Der Aufnahmeschaft 30 ist derart gestaltet, dass ein von dem Anschlussstutzen 31 abgewandtes Ende zur Verbindung mit dem nicht dargestellten maschinellen Antrieb geeignet ist. In dem dargestellten Ausführungsbeispiel ist für diesen Zweck ein zylinderstiftförmiges Ende mit einem kreisförmigen Querschnitt vorgesehen.

Der Anschlussstutzen 31 weist ein Außengewinde 310 zur Verbindung mit dem Innengewinde 210 an dem Kopplungsende 21 der Lochsäge 2 auf. Der Anschlussstutzen 31 ist dadurch ortsfest und spielfrei mit der Lochsäge 2 verbindbar. Der dargestellte Anschlussstutzen 31 weist eine dem Kopplungsende 21 zugewandte Anschlagfläche 311 auf, durch welche ein Schraubweg begrenzt ist. An dem dargestellten Anschlussstutzen 31 ist eine Schlüsselfläche 313 vorgesehen.

Mehrere Lochsägen 2 sind dabei jeweils mit einem Anschlussstutzen 31 ausrüstbar. Zur Kopplung einer mit einem Anschlussstutzen 31 ausgerüsteten Lochsäge 2 mit dem maschinellen Antrieb ist der Anschlussstutzen 31 werkzeuglos mit dem Aufnahmeschaft 30 verbindbar.

Der Aufnahmeschaft 30 weist in dem dargestellten Ausführungsbeispiel eine Ausnehmung 300 auf, in welche der Anschlussstutzen 31 einführbar ist.

Weiter weisen der Anschlussstutzen 31 und der Aufnahmeschaft 30 zueinander komplementäre konische Kontaktflächen 302, 312 auf. Die Kontaktfläche 312 an dem Anschlussstutzen 31 ist dabei anschließend an die Anschlagfläche 311 anordnet. Die Schlüsselfläche 313 ist im Bereich der Kontaktfläche 312 ausgebildet.

Die Ausnehmung 300 ist so gestaltet, dass der Anschlussstutzen 31 spielarm bis zur Anlage an dem in der Ausnehmung 300 vorgesehenen Gegenkonus eingesteckt werden kann. Die konischen Kontaktflächen 302, 312 stellen einen Rundlauf der Lochsägen 2 im Betrieb sicher.

Der Aufnahmeschaft 30 und der Anschlussstutzen 31 sind Teile einer Steckkupplung. Eine Arretierung des Anschlussstutzens 31 in dem Aufnahmeschaft 30 erfolgt in dem dargestellten Ausführungsbeispiel mittels einer zwischen einer dargestellten Verriegelungsstellung und einer Freigabestellung verschiebbaren Sicherungshülse 32 und einem als Rastkugel gestalteten Rastelement 33. Das Rastelement 33 ist in einer Ausnehmung 304 an dem Aufnahmeschaft 30 radial verschieblich angeordnet und greift in der dargestellten Verriegelungsstellung in eine durch einen Einstich geformte Rastnut 314 an den Anschlussstutzen 31. In der Freigabestellung der Sicherungshülse 32 weicht das Rastelement 33 radial aus und greift so nicht länger in die Rastnut 314. Durch Verschieben der Sicherungshülse 32 kann somit der Anschlussstutzen 31 und damit die Lochsäge 2 mit dem Aufnahmeschaft gekoppelt oder entkoppelt werden. Ein maximaler Verschiebeweg der Sicherungshülse 32 ist durch einen nicht dargestellten Spannring, welcher in eine Ringnut 305 eingesetzt ist, begrenzt. Die Position ist dabei derart gewählt, dass das Rastelement 33 auch in der Freigabestellung in der Ausnehmung 304 gesichert ist. Zwischen dem Spannring und der Sicherungshülse 32 ist eine ebenfalls nicht dargestellte Feder anordenbar, welche die Sicherungshülse 32 in die dargestellte Verriegelungsstellung zwingt.

In dem dargestellten Ausführungsbeispiel erfolgt die Übertragung des Drehmoments über stirnseitig an dem Anschlussstutzen 31 angebrachte Mitnehmerbolzen 316, die in die Mitnahmebohrungen 202 der Lochsäge 2 eingerastet werden.

Für Lochsägen 2, welche keine Mitnahmebohrungen aufweisen, ist in vorteilhaften Ausgestaltungen der Anschlussstutzen 31 mit entsprechenden Mitnahmebohrungen oder Ausnehmungen gestaltet, in welche die Mitnehmerbolzen 316 formschlüssig eingreifen.

Der dargestellte Anschlussstutzen 31 weist weiter eine Zentrumsbohrung 318 auf, durch die ein nicht dargestellter Zentrierbohrer gesteckt werden kann. Der Zentrierbohrer ist in der dargestellten Ausgestaltung in dem Aufnahmeschaft 30 in einer Ausnehmung 306 fest eingespannt und verbleibt beim Wechsel der Lochsäge 2 in dem Aufnahmeschaft 30.

Entsprechende Anschlussstutzen 31 sind an allen mit dem Aufnahmeschaft 30 verwendeten Lochsägen 2 montierbar. Dadurch ist später ein schneller Wechsel der Lochsägen 2 möglich.

Die dargestellte Kupplung mittels konischer Kontaktflächen 302, 312 verringert zudem Vibrationen, erhöht die Standzeit der Lochsägen 2 und verbessert die Bohrlochgüte. Zudem wird der Verschleiß der Antriebsmaschinen verringert und der Anwender bei handgeführten Antrieben weniger belastet.

## Patentansprüche

1. Aufnahme zur Kopplung einer Lochsäge (2) mit einem maschinellen Antrieb umfassend einen Aufnahmeschaft (30) zur Verbindung mit dem maschinellen Antrieb und einen werkzeuglos mit dem Aufnahmeschaft (30) verbindbaren, der Lochsäge (2) ortsfest zugeordneten Anschlussstutzen (31), wobei der Aufnahmeschaft (30) und der Anschlussstutzen (31) als Teile einer Steckkupplung ausgebildet sind, wobei die Steckkupplung eine zwischen einer Verriegelungsstellung und einer Freigabestellung verdreh- und/oder verschiebbare Sicherungshülse (32) und ein Rastelement (33) aufweist, wobei das Rastelement (33) in der Verriegelungsstellung in eine Rastnut (314) an dem Anschlussstutzen (31) und/oder dem Aufnahmeschaft (30) eingreift, wobei der Aufnahmeschaft (30) eine der Lochsäge (2) zugewandte Stirnfläche aufweist, und wobei der Aufnahmeschaft (30) mindestens einen von der Stirnfläche abragenden Mitnehmerstift (316) aufweist,
**dadurch gekennzeichnet, dass** der Aufnahmeschaft (30) und der Anschlussstutzen (31) zueinander komplementäre geradzylindrischen Abschnitte aufweisen, wobei die Rastnut (314) an dem geradzylindrischen Abschnitt des Anschlussstutzens (31) vorgesehen ist, und dass der Aufnahmeschaft (30) und der Anschlussstutzen (31) zueinander komplementäre konische Kontaktflächen (302, 312) aufweisen, wobei die konische Kontaktflächen (302, 312) zwischen der Lochsäge zugewandten Enden des Anschlussstutzens (31) und des Aufnahmeschafts (30) und den geradzylindrischen Abschnitten angeordnet sind.

2. Aufnahme nach Anspruch 1, **dadurch gekennzeichnet, dass** der Aufnahmeschaft (30) eine die konische Kontaktfläche (302) aufweisende Ausnehmung (300) aufweist, in welche der Anschlussstutzen (31) einführbar ist.

3. Aufnahme nach Anspruch 1 oder 2, **dadurch gekennzeichnet, dass** der Anschlussstutzen (31) ein Außengewinde (310) zur Verbindung mit einem, an einem Kopplungsende (21) der Lochsäge (2) vorgesehenen Innengewinde (210) aufweist.

4. Aufnahme nach Anspruch 1, 2 oder 3, **dadurch gekennzeichnet, dass** der Aufnahmeschaft (30) eine Ausnehmung (306) für einen Zentrierbohrer und der Anschlussstutzen (31) eine Zentrumsbohrung (318) zur Durchführung eines in der Ausnehmung eingesetzten Zentrierbohrers aufweist.

5. Aufnahme nach einem der Ansprüche 1 bis 4, **dadurch gekennzeichnet, dass** der Aufnahmeschaft (30) zwei von der Stirnfläche abragende Mitnehmerstifte (316) aufweist.

6. Werkzeuganordnung zur Verwendung mit einem maschinellen Antrieb umfassend eine Lochsäge (2) mit einem Schneidzähne (200) aufweisenden Schneidende (20) und einem gegenüberliegenden Kopplungsende (21) und eine Aufnahme (3) nach einem der Ansprüche 1 bis 5 mit einem Aufnahmeschaft (30) zur Verbindung mit dem maschinellen Antrieb und einem werkzeuglos mit dem Aufnahmeschaft (30) verbindbaren, der Lochsäge (2) ortsfest zugeordneten Anschlussstutzen (31), wobei der Aufnahmeschaft (30) und der Anschlussstutzen (31) zueinander komplementäre konische Kontaktflächen (302, 312) aufweisen.

## Claims

1. Holding fixture for coupling a hole saw (2) to a mechanical drive, comprising a holder shank (30) for connecting to the mechanical drive and a connection piece (31) fixedly associated with the hole saw (2), connectable to the holder shank (30) without a tool, wherein the holder shank (30) and the connection piece (31) are configured as parts of a plug-in coupling, wherein the plug-in coupling includes a securing sleeve (32) turnable and/or shiftable between a locking position and a release position and a latching element (33), wherein the latching element (33) in the locking position engages in a latching groove (314) on the connection piece (31) and/or the holder shank (30), wherein the holder shank (30) has a front surface facing the hole saw (2), and wherein the holder shank (30) includes at least one driving pin (316) protruding from the front surface,
**characterized in that**
the holder shank (30) and the connection piece (31) include mutually complementary straight cylindrical sections, wherein the latching groove (314) is provided on the straight cylindrical section of the connection piece (31), and **in that** the holder shank (30) and the connection piece (31) include mutually complementary conical contact surfaces (302, 312), wherein the conical contact surfaces (302, 312) are disposed between ends of the connection piece (31) and of the holder shank (30) facing the hole saw and the straight cylindrical sections.

2. Holding fixture according to claim 1, **characterized in that** the holder shank (30) has a recess (300) including the conical contact surface (302), wherein the connection piece (31) is insertable.

3. Holding fixture according to claim 1 or 2, **characterized in that** the connection piece (31) has an exterior thread (310) for connecting to an internal thread (210) provided on a coupling end (21) of the hole saw (2).

4. Holding fixture according to claim 1, 2 or 3, **characterized in that** the holder shank (30) has a recess (306) for a center drill and the connection piece (31) has a center hole (318) for passing through of a center drill inserted in the recess.

5. Holding fixture according to any of claims 1 to 4, **characterized in that** the holder shank (30) has two driving pins (316) protruding from the front surface.

6. Tool assembly for use with a mechanical drive, comprising a hole saw (2) having a cutting end (20) provided with cutting teeth (200) and an opposite coupling end (21) and a holder (3) according to any of claims 1 to 5, comprising a holder shank (30) for connecting to the mechanical drive and a connection piece (31) fixedly associated with the hole saw (2), connectable to the holder shank (30) without a tool, wherein the holder shank (30) and the connection piece (31) include mutually complementary conical contact surfaces (302, 312).

## Revendications

1. Réceptacle pour l'accouplement d'une scie cloche (2) à un entraînement par machine comprenant un arbre de réception (30) pour le raccordement à l'entraînement par machine et une tubulure de raccordement (31) pouvant être raccordée sans outil à l'arbre de réception (30), associée fixement à la scie cloche (2), l'arbre de réception (30) et la tubulure de raccordement (31) étant réalisés sous forme de pièces d'un accouplement par enfichage, l'accouplement par enfichage présentant une douille de fixation (32) pouvant tourner et/ou être déplacée par coulissement entre une position de verrouillage et une position de libération et un élément d'encliquetage (33), l'élément d'encliquetage (33) s'engageant dans la position de verrouillage dans une rainure d'encliquetage (314) sur la tubulure de raccordement (31) et/ou sur l'arbre de réception (30), l'arbre de réception (30) présentant une surface frontale tournée vers la scie cloche (2), et l'arbre de réception (30) présentant au moins une goupille d'entraînement (316) faisant saillie depuis la surface frontale,
**caractérisé en ce que** l'arbre de réception (30) et la tubulure de raccordement (31) présentent des portions cylindriques droites complémentaires l'une de l'autre, la rainure d'encliquetage (314) étant prévue au niveau de la portion cylindrique droite de la tubulure de raccordement (31), et **en ce que** l'arbre de réception (30) et la tubulure de raccordement (31) présentent des surfaces de contact coniques complémentaires l'une de l'autre (302, 312), les surfaces de contact coniques (302, 312) étant disposées entre les extrémités de la tubulure de raccordement (31) et de l'arbre de réception (30) tournées vers la scie cloche et les portions cylindriques droites.

2. Réceptacle selon la revendication 1, **caractérisé en ce que** l'arbre de réception (30) présente un évidement (300) présentant la surface de contact conique (302), dans lequel évidement peut être introduite la tubulure de raccordement (31).

3. Réceptacle selon la revendication 1 ou 2, **caractérisé en ce que** la tubulure de raccordement (31) présente un filetage extérieur (310) pour le raccordement à un filetage intérieur (210) prévu à une extrémité d'accouplement (21) de la scie cloche (2).

4. Réceptacle selon la revendication 1, 2 ou 3, **caractérisé en ce que** l'arbre de réception (30) présente un évidement (306) pour un foret de centrage et la tubulure de raccordement (31) présente un alésage central (318) pour le passage d'un foret de centrage inséré dans l'évidement.

5. Réceptacle selon l'une quelconque des revendications 1 à 4, **caractérisé en ce que** l'arbre de réception (30) présente deux goupilles d'entraînement (316) faisant saillie depuis la surface frontale.

6. Système d'outil pour l'utilisation avec un entraînement par machine comprenant une scie cloche (2) avec une extrémité de coupe (20) présentant des dents de coupe (200) et une extrémité d'accouplement (21) opposée et un réceptacle (3) selon l'une quelconque des revendications 1 à 5, avec un arbre de réception (30) pour le raccordement à l'entraînement par machine et une tubulure de raccordement (31) pouvant être raccordée sans outil à l'arbre de réception (30), associée fixement à la scie cloche (2), l'arbre de réception (30) et la tubulure de raccordement (31) présentant des surfaces de contact coniques complémentaires l'une de l'autre (302, 312).
